# EUROPÄISCHE PATENTANMELDUNG

(11) **EP 1 516 809 A2**
(43) Veröffentlichungstag der Anmeldung: **23.03.2005**
(21) Anmeldenummer: 04017154.8
(22) Anmeldetag: 21.07.2004
(51) Int. Cl.: B62M 7/02, B62K 13/04, B62K 5/00

(54) **Antriebsstrang und Fahrzeug**

(30) Priorität: 19.09.2003 DE 10343921; 21.11.2003 DE 10354804
(71) Anmelder: Merkle, Wolfgang, 89567 Sontheim (DE)
(72) Erfinder: Merkle, Wolfgang, 89567 Sontheim (DE)
(74) Vertreter: Dr. Weitzel & Partner

(57) **Zusammenfassung**

Die Erfindung betrifft einen Antriebsstrang zum Antrieb von auf einer Achse gelagerten Rädern für Fahrzeuge mit wenigstens drei Rädern, insbesondere Trikes oder Quads mit einer Antriebsmaschine, mit einem mit der Antriebsmaschine gekoppelten Getriebe, welches wenigstens mittelbar mit den anzutreibenden Rädern gekoppelt ist.

Die Erfindung ist gekennzeichnet durch die folgenden Merkmale:
- die Kopplung der Antriebsmaschine mit den Rädern erfolgt über ein Achsschaltgetriebe, umfassend einen Eingang und zwei Ausgänge, die mit den Rädern gekoppelt sind, umfassend wenigstens eine Vorwärtsfahrstufe und eine Rückwärtsfahrstufe;
- die Antriebsmaschine ist als Zweiradmotor, insbesondere Ein- oder Zweizylindermotor ausgeführt.

## Beschreibung

Die Erfindung betrifft einen Antriebsstrang, im Einzelnen mit den Merkmalen aus dem Oberbegriff des Anspruches 1; ferner ein Fahrzeug, insbesondere Trike und Quad.

Fahrzeuge in Form von sogenannten Trikes, d. h. Fahrzeuge mit wenigstens drei Rädern, sind in bekannter Weise mit einer Antriebseinheit, die aus einer kompletten Hinterachse mit einer Antriebsmaschine oder zumindest eines Getriebes besteht, ausgestattet, wobei die Antriebseinheit einen Pkw-Motor umfasst. Dabei ist der Pkw-Motor in der Regel quer zur Fahrzeuglängsachse im Fahrzeug eingebaut und mit einem Getriebe gekoppelt, welches den auf einer theoretischen Verbindungsachse angeordneten anzutreibenden Rädern zugeordnet ist, wobei das Getriebe durch wenigstens zwei Ausgänge charakterisiert ist, die mit den anzutreibenden Rädern verbunden sind. Dabei werden unterschiedlichste Pkw-Motoren eingesetzt, wobei jedoch aufgrund der speziellen Anforderungen beim Trikeantrieb auf spezielle Produkte einzelner Hersteller zurückgegriffen wird. Ein wesentliches Problem besteht dabei zunehmend in der Verfügbarkeit dieser einzelnen standardmäßig für den Pkw-Bereich eingesetzten Teile. Zur Lösung dieses Problems sind dabei Ausführungen bekannt, bei denen standardmäßig verwendete Pkw-Motoren unterschiedlichster Art mit dem ohnehin üblicherweise für Trikeantriebe verwendeten Getriebe durch Realisierung der Verbindung über einen Adapter gekoppelt werden. Ein wesentliches Problem bei der Verwendung von Motoren, die für den Einsatz im Pkw-Bereich für eine bestimmte Leistung konzipiert sind, sind die dann mit den Getrieben zu erzielenden Übersetzungen, welche sich wiederum auf die Ausgestaltung der Getriebe auswirken. Um für den Einsatz in dreirädrigen Fahrzeugen, insbesondere Trikes auch auf Motoren geringerer Leistung zurückgreifen zu können, sind die Getriebe entsprechend anzupassen. Dies ist jedoch durch einen erheblichen Aufwand gekennzeichnet. Der Einbau der Pkw-Motoren in Trikes erfolgt dabei aufgrund der für die Sitzpositionen geforderten niedrigen Bauweise und der geometrischen Abmessungen der Pkw-Motoren hinter dem Beifahrersitz. Das Fahrzeug ist dadurch durch eine enorme Baulänge mit den durch diese bedingten Nachteilen hoher Kosten und einer schlechten Händelbarkeit im Stadtverkehr, insbesondere der Parkplatzproblematik charakterisiert.

Der Erfindung lag daher die Aufgabe zugrunde, eine Motor-Getriebeeinheit in einfacher Art und Weise für den Antrieb in Fahrzeugen mit wenigstens drei Rädern, insbesondere Trikes zu schaffen, wobei auf aufwendige Zusatzlösungen beim Einsatz für andere Fahrzeuge standardisierter Motoren und/oder Getriebe verzichtet werden kann und der konstruktive Aufwand gering gehalten wird und der vorhandene Bauraum optimal ausgenutzt wird. Ferner soll das Fahrzeug für den Einsatz als Stadtfahrzeug geeignet sein, welches durch ein leichtes Handling, geringe Baulänge und niedrige Kosten charakterisiert ist.

Die erfindungsgemäße Lösung ist durch die Merkmale des Anspruchs 1 charakterisiert. Vorteilhafte Ausgestaltungen sind in den Unteransprüchen beschrieben.

Erfindungsgemäß umfasst der Antriebsstrang zum Antrieb von wenigstens zwei auf einer gemeinsamen theoretischen Achse gelagerten Rädern für Fahrzeuge mit wenigstens drei Rädern, insbesondere Trikes oder Quads, eine Antriebsmaschine, welche über ein Getriebe wenigstens mittelbar mit den anzutreibenden Rädern verbunden ist. Die Verbindung erfolgt dabei über ein schaltbares Achsgetriebe, dessen Eingang mit dem Ausgang des vorzugsweise als Zugmittelgetriebe ausgeführten Getriebes wenigstens mittelbar gekoppelt ist und das wenigstens zwei Ausgänge aufweist, die mit den anzutreibenden Rädern verbunden sind. Das Achsschaltgetriebe weist dabei wenigstens eine Vorwärts- und eine Rückwärtsfahrstufe auf. Vorzugsweise können zusätzlich weitere Untersetzungen vorgesehen werden. Die Antriebsmaschine ist erfindungsgemäß als Zweiradmotor, insbesondere Rollermotor bzw. Antriebsmaschine in Form einer Verbrennungskraftmaschine mit flach liegenden oder schräg angeordneten Zylindern ausgeführt. D. h. die Zylinder sind nicht senkrecht, d. h. in vertikaler Richtung zur Fahrzeuglängsachse angeordnet, sondern in einem Winkel, vorzugsweise sind diese geeignet oder nahezu horizontal angeordnet. Diese Bauweise der Antriebsmaschine bietet den Vorteil, dass diese nunmehr unter dem Beifahrersitz oder einer Sitzgruppe angeordnet werden kann ohne bauliche Änderungen bzw. Veränderungen der Einbauhöhe dieser. Dabei ist die Antriebsmaschine vorzugsweise quer eingebaut. Ein Einbau längs ist bei geringer Größe der Antriebsmaschine ebenfalls denkbar. Damit kann der zur Verfügung stehende Bauraum optimal genutzt werden. Ferner kann mit dieser Anordnung der Schwerpunkt des Gesamtsystems sehr tief gehalten werden. Bei den Zweiradmotoren werden üblicherweise Rollermotoren eingesetzt. Diese sind insbesondere als Ein- oder Zweizylindermotor ausgeführt. Es handelt sich dabei um Motoren, die üblicherweise nur für Zweiradfahrzeuge Verwendung finden. Diese können beispielsweise durch einen Hubraum von einschließlich 125 cm³ bis 1000 cm³ und einer Leistung von einschließlich 11 KW bis 130 KW charakterisiert sein. Diese Ausführung der Antriebsmaschine ermöglicht einen Einbau unter dem Beifahrersitz bei gleicher oder geringerer Einbauhöhe gegenüber den bekannten Ausführungen aus dem Stand der Technik. Diese Verlagerung der Antriebsmaschine ermöglicht damit eine wesentlich kompaktere Ausführung, insbesondere in Bezug auf die Baulänge. Diese Verringerung schlägt sich in einer erheblichen Verringerung der Gesamtherstellungskosten für ein derartiges Fahrzeug nieder. Das Fahrzeug selbst wird aufgrund der Verkürzung besser für den Einsatz als Stadtfahrzeug geeignet. Die erfindungsgemäße Lösung ermöglicht es auch, auf Motoren geringerer Leistung zurückzugreifen.

Die Kopplung mit dem Achsschaltgetriebe erfolgt erfindungsgemäß über ein Getriebe in Form eines Zugmittelgetriebes. Damit und mit der Ausbildung des Achsschaltgetriebes als Schaltgetriebe, umfassend wenigstens eine Vorwärts- und eine Rückwärtsfahrstufe und vorzugsweise noch weitere Schaltstufen wird gewährleistet, dass auch hier der gesamte Betriebsbereich der Antriebsmaschine vollständig ausgenutzt wird, ohne auf eine zusätzliche Schaltgetriebeeinheit zurückgreifen zu müssen. Femer können standardisiert vorliegende Motoren für Zweiräder genutzt werden, die auf einfache Art und Weise in bestehende Antriebskonzepte integriert werden können. Wesentlich ist dabei die Ausgestaltung der Achse mit dem Achsschaltgetriebe.

Für die konkrete Ausgestaltung der Kopplung zwischen Antriebsmaschine und dem Achsschaltgetriebe über das Getriebe, insbesondere Zugmittelgetriebe bestehen eine Mehrzahl von Möglichkeiten. Dabei handelt es sich vorzugsweise um integrierte Motor-Getriebebaueinheiten, wobei diese im erstgenannten Fall aus einer Antriebsmaschine und einem Getriebe bestehen, die aneinander an ihren Gehäusen angeflanscht sind oder aber gemäß einer besonders vorteilhaften Ausgestaltung eine Einheit aus einer Antriebsmaschine mit integriertem Getriebe bilden. Im letztgenannten Fall ist das Getriebe gemäß einer besonders vorteilhaften Ausgestaltung als stufenloses Getriebe in Form eines Zugmittelgetriebes, insbesondere Variomatik ausgeführt. Antriebsmaschine und Zugmittelgetriebe sind dabei in einem gemeinsamen Gehäuse angeordnet. Damit wird ein besonders kompaktes Antriebsaggregat eingesetzt, welches ferner aufgrund seines Aufbaus auch den Erfordernissen bezüglich der zu erzielende Übersetzung gerecht wird. Aufgrund der stufenlosen Leistungsübertragung ist das Antriebsaggregat bzw. das in dieser vorhandene Getriebe prädestiniert für die Anwendung als Automatgetriebe. Die Rückwärtsfahrstufe wird in einfacher Weise über das Achsschaltgetriebe realisiert. Je nach Ausgestaltung der Verbindung zwischen Getriebe und Achsschaltgetriebe kann diese
a) eine starre Welle umfassen, die durch beide Getriebe geht oder
b) elastisch, d. h. beispielsweise über eine elastische Kupplung oder
c) fest, d. h. über eine feste Kupplung bzw. Verbindung realisiert werden.

Die Verbindung hängt ferner von der Ausrichtung der Aus- und Eingänge am Getriebe und Achsschaltgetriebe ab. Diese sind vorzugsweise koaxial zueinander angeordnet oder aber in einem Winkel oder parallel. Bei koaxialer Anordnung wird bei Ausbildung der Verbindung über eine starre Welle zur Realisierung der Verbindung mit der jeweils anderen Komponente, Achsschaltgetriebe oder Getriebe bei minimalem Bauraumbedarf vorzugsweise in das Gehäuse des Achsschaltgetriebes oder Getriebes einführbar ist und die Verbindung innerhalb der axialen Erstreckung dieser Komponente erfolgt.

Bei der integrierten Ausführung von Motor, d. h. Antriebsmaschine und Zugmittelgetriebe in einem Gehäuse wird vorzugsweise der Ausgang des Zugmittelgetriebes steckbar gestaltet. Dies bedeutet, dass beispielsweise der Eingang des Achsschaltgetriebes, welcher von einer Welle gebildet wird, bei gewünschter starrer Verbindung mit dem Zugmittelgetriebe, drehfest mit dem Ausgang dessen durch eine Steckverbindung gekoppelt wird. Dazu wird vorzugsweise der Ausgang des Zugmittelgetriebes von einer die Ausgangsscheibe tragenden Hohlwelle gebildet, die im Gehäuse drehbar gelagert ist und am Innenumfang form- oder kraftschlüssige Mitnahmeelemente trägt, die mit formkraftschlüssigen Mitnahmeelementen an der starren Weller der Anschlusseinheit, insbesondere dem Achsschaltgetriebe verbindbar bzw. in Wirkverbindung bringbar ist. Die Lösung ermöglicht einen einfachen und platzsparenden Zusammenbau des Motor-Getriebe-Aggregates mit dem Achsschaltgetriebe. Dabei kann ein Motor-Getriebeaggregat je nach Ausgestaltung der Anschlussmöglichkeit mit beliebigen Achsschaltgetrieben kombiniert werden. Das jedoch gilt in Analogie auch für die entsprechende Ausführung des Einganges des Achsschaltgetriebes. Auch dieser kann derart ausgeführt sein, dass er geeignet ist, mit einer Ausgangswelle des Motor-Getriebe-Aggregats beispielsweise durch eine Steckverbindung gekoppelt werden. Vorzugsweise erfolgt die Verbindung jeweils direkt in den Gehäusen von Motor-Getriebe-Aggregat oder Achsschaltgetriebe. Diese kann beliebig ausgebildet sein, ist jedoch drehfest und lösbar auszuführen.

Das Achsschaltgetriebe selbst umfasst vorzugsweise wenigstens einen Vorwärtsund einen Rückwärtsgang und/oder mehrere Gangstufen. Durch diese Stufung ist es möglich, auch bei Ausbildungen des Antriebsstranges mit Antriebsmaschine und direkt gekoppeltem Zugmittelgetriebe eine breite Spreizung zu erzielen. Bezüglich der Ausbildung des Achsschaltgetriebes bestehen eine Vielzahl von Möglichkeiten. Dieses umfasst wenigstens ein Differential mit Untersetzung und einen Rückwärtsgang. Damit können wesentliche Funktionen beziehungsweise Schaltfunktionen auf die Achse verlagert werden und sind unabhängig von der Art der verwendeten Antriebsmaschine.

Die Anbindung beziehungsweise Aufhängung der Achse am Fahrwerk erfolgt erfindungsgemäß über zwei symmetrisch bezüglich der Fahrzeugmittelachse beziehungsweise Fahrzeuglängsachse angeordnete Querlenker.

Der erfindungsgemäße Antriebstrang ist für Fahrzeuge in Form von Trikes oder Quads sowie auch andere vierrädrige Fahrzeuge einsetzbar. Diese können dabei als 2 bis 4-Sitzer ausgeführt sein.

Die erfindungsgemäße Lösung wird nachfolgend anhand von Figuren erläutert. Darin ist im einzelnen Folgendes dargestellt:
- Figur 1: verdeutlicht in schematisch vereinfachter Darstellung eine erste Ausführung eines erfindungsgemäß gestalteten Antriebsstranges in der Draufsicht;
- Figuren 2a und 2b: verdeutlichen in schematisch stark vereinfachter Darstellung den erfindungsgemäß Antriebstrang in einem Trike oder Quad in zwei Seitenansichten gemäß Figur 1.

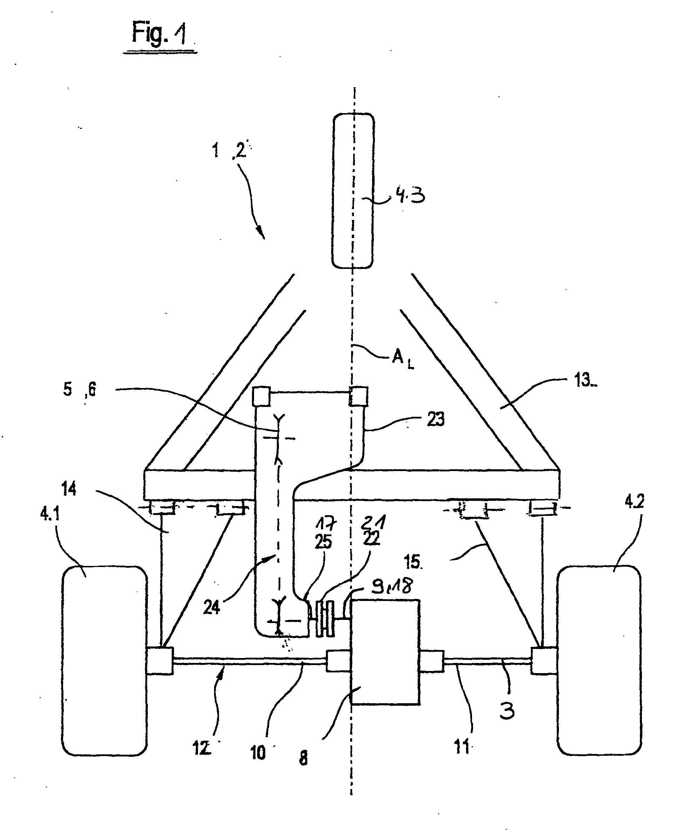

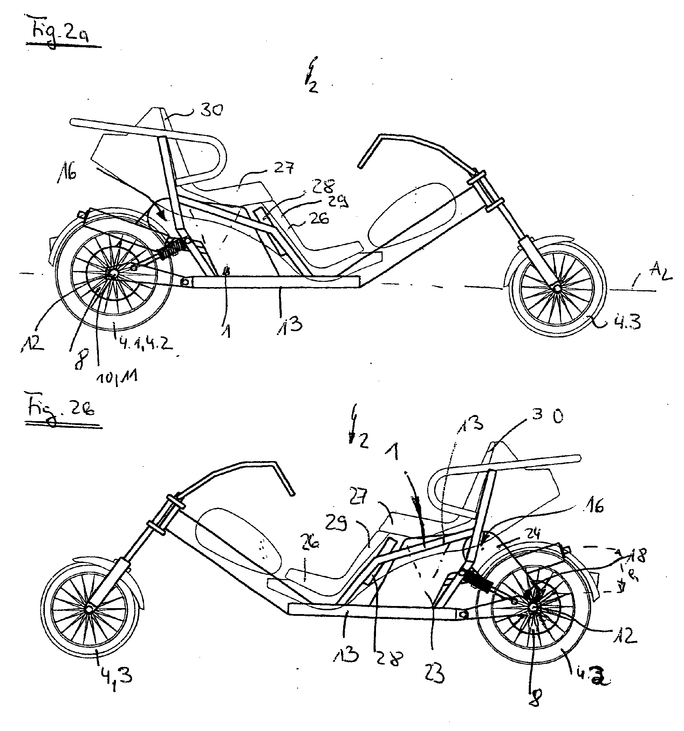

Die Figur 1 verdeutlicht in schematisch vereinfachter Darstellung anhand einer Draufsicht einen erfindungsgemäß gestalteten Antriebsstrang 1 für Fahrzeuge 2 mit mindestens drei Rädern. Der Antriebsstrang 1 dient dabei zum Antrieb der in einer Achse 3 gelagerten Räder 4. Dieser umfasst eine Antriebsmaschine 5, bei welcher es sich um eine Antriebsmaschine für Zweiräder handelt. Diese ist dabei als Verbrennungskraftmaschine mit flach liegenden oder geneigt schräg angeordneten und hier nur mittels unterbrochener Linie in Figur 2 hinsichtlich der Lage angedeuteten Zylindern ausgeführt. Dies bedeutet, dass in Einbaulage der Antriebsmaschine 5 die Zylinder parallel oder geneigt gegenüber einer Senkrechten zur theoretischen Fahrzeuglängsachse A_{L} angeordnet sind. Aufgrund der dadurch bedingten flachen Ausgestaltung der Antriebsmaschine 5 kann diese daher unter dem Beifahrersitz angeordnet werden. Die Ausführung kann als Ein-oder Mehrzylindermotor erfolgen. Mit der Antriebsmaschine 5 ist ein Getriebe 7 gekoppelt, welches wenigstens mittelbar mit den anzutreibenden Rädern 4 verbunden ist. Erfindungsgemäß erfolgt die Verbindung über ein Achsschaltgetriebe 8, umfassend mindestens einen Eingang 9 und zwei Ausgänge 10 und 11, die jeweils mit den anzutreibenden Rädern 4, die auf einer theoretischen Verbindungsachse liegen, verbunden sind. Das Achsschaltgetriebe 8 umfasst wenigstens eine Vorwärts- und eine Rückwärtsfahrstufe. Die Antriebsmaschine 5 ist wie bereits ausgeführt erfindungsgemäß als Zweiradmotor ausgeführt. Diese kann beispielsweise durch einen Leistungsbereich von 11 KW bis 130 KW und einen Hubraum im Bereich von 125 cm³ bis 1000 cm³ charakterisiert sein. Die Anbindung der Achse 3, bei welcher es sich vorzugsweise um die Hinterachse 12 handelt, an das Fahrzeug 2 erfolgt am Rahmen 13 über zwei sogenannte Schräglenker 14 und 15, die vorzugsweise im wesentlichen symmetrisch bezogen auf die Fahrzeuglängsachse A_{L} angeordnet sind.

Bei der in der Figur 1 dargestellten Ausführung handelt es sich bei dem Fahrzeug 2 um ein sogenanntes Trike mit drei Rädern, zwei an der Hinterachse 12 gelagerten Rädern 4.1 und 4.2 und einem dritten Rad 4.3. Bei der Antriebsmaschine 5 handelt es sich um einen Motorradmotor, dem ein Getriebe 7 nachgeschaltet ist, wobei es sich hierbei um eine Ausführung mit integrierter Variomatik handelt. Diese integrierte Variomatik ist durch ein im Motorgehäuse 23 integriertes Zugmittelgetriebe 24 charakterisiert. Dieses ist hier stark schematisiert mittels unterbrochener Linie angedeutet. Die gesamte Antriebsmaschine 5 mit integrierter Variomatik ist dabei als Motor-Getriebebaueinheit 16 quer eingebaut, wobei der Ausgang 25 am Zugmittelgetriebe quer zur Fahrzeuglängsachse A_{L} ausgerichtet ist und parallel zu den Ausgängen 10 und 11 des Achsschaltgetriebes 8 verläuft. Die Gesamtbaueinheit aus Antriebsmaschine 5 und integrierter Variomatik in Form des Zugmittelgetriebes 24 wird hier mit 16 bezeichnet. Diese ist am Rahmen 13 des Fahrzeuges 2 aufgehängt. Die Anbindung der Hinterachse 12 beziehungsweise Abstützung der Hinterachse 12 am Fahrzeugrahmen erfolgt über die Schräglenker 14 und 15. Diese sind vorzugsweise aus Aluminiumguss gefertigt.

Das erfindungsgemäß verwendete Achsschaltgetriebe 8 ist dabei als Differentialgetriebe mit Rückwärtsgang und Untersetzung ausgebildet, wobei hier beispielsweise eine Untersetzung von einschließlich 1 zu 6 bis 1 zu 12 erzielt wird. Zwischen der Gesamtbaueinheit 16 aus Antriebsmaschine 5.2 und integrierter Variomatik, das heißt dem Zugmittelgetriebe 24 kann, eine elastische Kupplung 22 angeordnet werden. Diese übernimmt neben der Drehmomentübertragung die Funktion eines Schwingungsdämpfers 21. Eine starre Kopplung zwischen Variomatik und Achsschaltgetriebe 8 ist ebenfalls denkbar. In diesem Fall wird eine Verbindungswelle vorzugsweise direkt in das Gehäuse der Variomatik oder das Achsschaltgetriebe 8 geführt. Die Verbindungswelle kann dabei der Motor-Getriebebaueinheit 16 oder dem Achsschaltgetriebe 8 zugeordnet sein, d. h. Bestandteil dieser Komponenten sein, wobei in diesem Fall die Verbindungswelle entweder von einer den Ausgang 25 bildenden Ausgangswelle 17 der Motor-Getriebebaueinheit 16 oder dem als Eingangswelle 18 des Achsschaltgetriebes 8 gebildet wird. Diese wird dann in das Gehäuse der jeweils anderen Komponente eingeführt und dort mit den Leistungsübertragungselementen gekoppelt. Diese Verbindung erfolgt drehfest und wird in axialer Richtung fixiert. Vorzugsweise wird die Verbindung derart ausgestaltet, dass diese durch Einstecken realisiert werden kann. Diese Möglichkeit bietet den Vorteil einer verkürzten Bauweise in Richtung quer zur Fahrzeuglängsachse A_{L}. Die drehfeste Verbindung wird dabei in das Gehäuse einer der beiden miteinander zu verbindenden Komponenten verlagert.

Die Figuren 2a und 2b verdeutlichen in schematisiert vereinfachter Darstellung die Integration eines erfindungsgemäß gestalteten Antriebstranges 1 in einem Fahrzeug 2 in Form eines Trikes. Zu erkennen sind die Räder 4.3 sowie die auf einer gemeinsamen Hinterachse 12 gelagerten Räder 4.1 und 4.2. Ferner ersichtlich ist die Anordnung der Sitzpositionen, insbesondere eines Fahrersitzes 26 und des Beifahrersitzes 27, die in Richtung der Fahrzeuglängsachse A_{L} hintereinander erfolgt. Der Antriebstrang 1 stützt sich dabei am Rahmen 13 ab. Die als Rollermotor mit integrierter Variomatik, d. h. integriertem Getriebe 7 ausgeführte Motor-Getriebeeinheit 16 ist dabei unter dem Beifahrersitz 27 angeordnet. Die Antriebsmaschine 5 ist quer eingebaut und, wie bereits für die Figur 1 ausgeführt, als Zweiradmotor mit flachliegenden bzw. geneigt angeordneten Zylindern ausgeführt. Die dadurch bedingte niedrige Bauhöhe in vertikaler Richtung kann zur Verschiebung der Motor-Getriebeeinheit 16 unter den Beifahrersitz 27 genutzt werden. Dadurch wird die Antriebsmaschine 5 bzw. die gesamte Motor-Getriebeeinheit 16 gegenüber den Ausführungen aus dem Stand der Technik näher zum Fahrer hinverschoben. Dies hat zur Folge, dass auch die Hinterachse 12 näher an die Position des Fahrersitzes 26 herangeschoben werden kann. Das Gesamtfahrzeug 2, insbesondere Trike oder Quad baut damit in der Länge wesentlich kürzer. Diese Längenverkürzung äußert sich neben einer erheblichen Gewichtsreduzierung auch in einer enormen Reduzierung der Herstellungskosten. Zu erkennen ist ferner, dass der der Antriebsmaschine 5 zugeordnete und im Gehäuse 23 integrierte Zugmittelgetriebe 24. Dieses erstreckt sich dabei vom Ausgang der Antriebsmaschine 5 im wesentlichen parallel zur Fahrzeuglängsachse A_{L} in Richtung zur Hinterachse 12, wobei auch hier ein Höhenunterschied überbrückt wird. Dieser Höhenunterschied resultiert aus der Höhe h des Ausganges der Antriebsmaschine 5 und der Anordnung des Einganges 9 am Achsschaltgetriebe 8, dessen Ausgänge 10, 11 auf der theoretischen Verbindungsachse zwischen den anzutreibenden Rädern 4.2 und 4.3 liegen. Der Eingang 9 des Achsschaltgetriebes 8 ist dabei parallel zur Achse 12 vorzugsweise angeordnet. Femer erkennbar ist die Anordnung eines Kühlers 28, der der Antriebsmaschine 5 zugeordnet ist. Diese erfolgt unmittelbar hinter dem Fahrersitz 26, insbesondere der Rückenlehne 29. Dabei kann je nach Ausführung der Antriebsmaschine 5 in Form des Zweiradmotors bzw. der Motor-Getriebebaueinheit 15 bei gleichbleibender Bodenfreiheit die Anordnung dieser derart erfolgen, dass diese sich in einem Bereich bis zum Abschluss der Rückenlehne 30 des Beifahrersitzes 27 oder aber geringfügig über diese hinaus erstreckt. Entscheidend ist, dass mit dieser Anordnung der Abstand zwischen dem Beifahrersitz 27 und der Hinterachse 12 hinsichtlich des benötigten Bauraumes in Richtung parallel zur Fahrzeuglängsachse A_{L} minimal gehalten werden kann. Aufgrund der Ausführung des Getriebes 7 als Zugmittelgetriebe 24 kann auf einfache Art und Weise ein Automatgetriebe realisiert werden. Über das Achsschaltgetriebe 8 wird in diesem Fall vorzugsweise lediglich nur noch der Vorwärts- und Rückwärtsgang realisiert. Die Schaltung des Vorwärts- und Rückwärtsganges kann dabei manuell erfolgen, beispielsweise über eine direkte Kopplung zwischen einem hier nicht dargestellten Fahrerwunschbedienelement und dem Achsschaltgetriebe 8. Die Steuerung des Übersetzungsverhältnisses in der Variomatik erfolgt in herkömmlicher Weise mechanisch.

Bei Ausführung als Trike wird vorzugsweise die Anordnung Fahrersitz 26 und Beifahrersitz 27 beibehalten. Denkbar ist jedoch auch die Anzahl der Sitze auf 3 oder 4 zu erweitern, wobei diese dann vorzugsweise paarweise nebeneinander angeordnet sind. Das erfindungsgemäß gestaltete Fahrzeug ist somit in optimaler Weise für die Anforderungen im Stadtverkehr prädestiniert, insbesondere aufgrund seiner sehr kurzen Baulänge, die sich im Bereich eines herkömmlichen Kleinfahrzeuges, beispielsweise vom Typ Smart, bewegen kann.

### Bezugszeichenliste

- 1: Antriebsstrang
- 2: Fahrzeug
- 3: Achse
- 4, 4.1 ,4.2, 4.3,: Räder
- 5: Antriebsmaschine
- 6: Ein-oder Zweizylindermotor
- 7: Getriebe
- 8: Achsschaltgetriebe
- 9: Eingang
- 10: Ausgang
- 11: Ausgang
- 12: Hinterachse
- 13: Rahmen
- 14: Schräglenker
- 15: Schräglenker
- 16: Motor-Getriebeeinheit
- 17: Ausgangswelle
- 18: Eingangswelle
- 21: Vorrichtung zur Dämpfung von Schwingungen
- 22: elastische Kupplung
- 23: Motorgehäuse
- 24: Zugmittelgetriebe
- 25: Ausgang
- 26: Fahrersitz
- 27: Beifahrersitz
- 28: Kühleinrichtung
- 29: Rückenlehne
- A_{L}: Fahrzeuglängsachse

## Patentansprüche

1. Antriebsstrang (1) zum Antrieb von auf einer Achse (3, 12) gelagerten Rädern (4.1, 4.2) für Fahrzeuge (2) mit wenigstens drei Rädern (4.1, 4.2, 4.3), insbesondere Trikes oder Quads;
1.1 mit einer Antriebsmaschine (5);
1.2 mit einem mit der Antriebsmaschine (5) gekoppelten Getriebe (7), welches wenigstens mittelbar mit den anzutreibenden Rädern (4.1, 4.2) gekoppelt ist; **gekennzeichnet durch** die folgenden Merkmale:
1.3 die Kopplung der Antriebsmaschine (5) mit den Rädern (4, 4.1, 4.2, 4.3) erfolgt über wenigstens eine Vorwärtsfahrstufe und eine Rückwärtsfahrstufe umfassendes Achsschaltgetriebe (8), umfassend einen Eingang (9) und zwei Ausgänge (10, 11), die mit den Rädern (4, 4.1, 4.2, 4.3) gekoppelt sind;
1.4 die Antriebsmaschine (5) ist als Zweiradmotor ausgeführt und **durch** die flache oder gegenüber der Vertikalen zur Fahrzeuglängsachse (A_{L}) geneigte Anordnung der Zylinder charakterisiert.

2. Antriebsstrang (1) nach Anspruch 1, **dadurch gekennzeichnet, dass** der Zweiradmotor (5) als Ein- oder Zweizylindermotor ausgeführt ist.

3. Antriebsstrang (1) nach einem der Ansprüche 1 oder 2, **dadurch gekennzeichnet, dass** der Zweiradmotor (5) durch einen Hubraum im Bereich von einschließlich 125 cm³ bis einschließlich 1000 cm³ und durch einen Leistungsbereich von einschließlich 11 bis einschließlich 130 KW charakterisiert ist.

4. Antriebsstrang nach einem der Ansprüche 1 bis 3, **dadurch gekennzeichnet, dass** die Antriebsmaschine (5) als Zwei- oder Viertaktmotor ausgebildet ist.

5. Antriebsstrang (1) nach einem der Ansprüche 1 bis 4, **gekennzeichnet durch** die folgenden Merkmale:
5.1 die Antriebsmaschine (5) ist quer zur Fahrzeuglängsachse (A_{L}) eingebaut;
5.2 das Getriebe (7) ist als Zugmittelgetriebe (24) ausgeführt;
5.3 der Ausgang (25) des Zugmittelgetriebes (24) ist mit dem Eingang (9) des Achsschaltgetriebes (8) gekoppelt, wobei der Eingang (9) des Achsschaltgetriebes (8) quer oder geneigt zur Fahrzeuglängsachse (A_{L}) ausgerichtet ist.

6. Antriebsstrang (1) nach Anspruch 5, **dadurch gekennzeichnet, dass** die Antriebsmaschine (5) und das Zugmittelgetriebe (24) in einem gemeinsamen Gehäuse (23) angeordnet sind und eine Motor-Getriebebaueinheit (26) bilden.

7. Antriebsstrang (1) nach einem der Ansprüche 1 bis 6, **dadurch gekennzeichnet, dass** zwischen dem Ausgang (25) des Getriebes (7) und dem Eingang (9) des Achsschaltgetriebes (8) eine Vorrichtung zur Dämpfung von Schwingungen angeordnet ist.

8. Antriebsstrang (1) nach Anspruch 7, **dadurch gekennzeichnet, dass** die Vorrichtung zur Dämpfung von Schwingungen (21) von einer elastischen Kupplung (22) gebildet wird.

9. Antriebsstrang (1) nach einem der Ansprüche 1 bis 6, **dadurch gekennzeichnet, dass** die Verbindung zwischen dem Ausgang (25) des Getriebes (7) und dem Eingang (19) des Achsschaltgetriebe (8) eine starre Welle umfasst.

10. Antriebsstrang (1) nach Anspruch 9, **dadurch gekennzeichnet, dass** die starre Welle in das Gehäuse des Getriebes (7) oder das Gehäuse des Achsschaltgetriebes (8) eingeführt ist und in diesen Bereich einen Einfuhrbereich bildet, wobei die starre Welle nicht Bestandteil dieses Getriebes (7) oder Achsschaltgetriebes (8) ist.

11. Antriebstrang (1) nach Anspruch 9 oder 10, **dadurch gekennzeichnet, dass** die starre Welle Bestandteil des Getriebes (7) ist und deren Ausgang (25) bildet.

12. Antriebstrang (1) nach Anspruch 9 oder 10, **dadurch gekennzeichnet, dass** die starre Welle Bestandteil des Achsschaltgetriebes (8) ist und den Eingang (9) dieses bildet.

13. Antriebstrang (1) nach einem der Ansprüche 11 oder 12, **dadurch gekennzeichnet, dass** die starre Welle im Einführbereich Mittel zur Realisierung einer form- und/oder kraftschlüssigen drehfesten Verbindung mit einem Leistungsübertragungselement des Getriebes (7) oder Achsschaltgetriebes (8) aufweist.

14. Antriebsstrang (1) nach einem der Ansprüche 1 bis 13, **dadurch gekennzeichnet, dass** die Achse (3) von der Hinterachse (12) gebildet wird.

15. Antriebsstrang (1) nach einem der Ansprüche 1 bis 14, **dadurch gekennzeichnet, dass** die Anbindung der Achse (3, 12) über zwei Schräglenker (14, 15) am Rahmen (13) erfolgt.

16. Fahrzeug (2) mit einem Antriebsstrang nach einem der Ansprüche 1 bis 15.

17. Fahrzeug (2) nach Anspruch 16, **dadurch gekennzeichnet, dass** dieses als Trike ausgeführt ist.

18. Fahrzeug (2) nach Anspruch 16, **dadurch gekennzeichnet, dass** dieses als Quad ausgeführt ist.

19. Fahrzeug (2) nach einem der Ansprüche 16 bis 18, umfassend wenigstens einen Fahrersitz (26) und einen diesen nachgeordneten und gegenüber diesem in vertikaler Richtung erhöht angeordneten Beifahrersitz (27), **dadurch gekennzeichnet, dass** die Antriebsmaschine (5) unterhalb des Beifahrersitzes (27) und in Richtung parallel zur Fahrzeuglängsachse (A_{L}) betrachtet im Bereich der Erstreckung des Beifahrersitzes (27) angeordnet ist.
